# EUROPEAN PATENT APPLICATION

(11) **EP 3 306 050 A1**
(43) Date of publication of application: **11.04.2018**
(21) Application number: 16192139.0
(22) Date of filing: 04.10.2016
(51) Int. Cl.: F02B 63/04, H02K 9/10, H02K 5/10, H02K 5/20, F24F 13/02, F16L 27/10, H02K 9/26

(54) **A SEALING ARRANGEMENT AND A SEALING METHOD FOR AN ELECTRICAL MACHINE**

(71) Applicant: ABB Schweiz AG, 5400 Baden (CH)
(72) Inventor: Mäkinen, Antti, 00380 Helsinki (FI); Aarnivuo, Samu, 00380 Helsinki (FI)
(74) Representative: Kolster Oy Ab

(57) **Abstract**

A sealing arrangement for an electrical machine for reducing a gas leakage flow is invented. The sealing arrangement (1) comprises an electrical machine (2) in gas flow (7) connection with a housing (4). The sealing arrangement comprises an insulating fabric (5) comprising a first (9a) and a second (9b) opposing edge regions. The insulating fabric (5) is fitted to cover a gap (6) between the electrical machine (2) and the housing (4). The insulating fabric (5) is configured to stay non-tensioned, and the insulating fabric (5) is attached to the electrical machine (2) and to the housing (4) by means of cover strips (8). The first (9a) and second (9b) edge regions of the insulating fabric (5) comprise a protrusion (10) and the cover strip (8) comprises a space (25) for locking the protrusion (10) at least partially within the cover strip (8).

## Description

### FIELD OF THE INVENTION

The invention relates to a sealing arrangement and a sealing method for an electrical machine for reducing a gas leakage flow, and particularly to a sealing arrangement and a method for reducing a gas leakage flow through a gap between an electrical machine and a housing.

### BACKGROUND OF THE INVENTION

An electrical machine generates heat in its various parts because of mechanical losses, magnetic losses and electrical losses. This excess heat has to be removed. The heat is often transferred to a cooling fluid which is circulated in the electrical machine and then cooled in a separate cooling unit after which it is returned back to the electrical machine. The heat may also be transferred to surroundings by circulating cooling air with a fan in the electrical machine and transferring the cooling air to the surroundings.

The connection between the electrical machine and the cooling unit has to be sealed to prevent a cooling fluid leakage. A common solution is to provide a sealing strip to block the gap between the cooling unit and the frame of the electrical machine. However, the installation of the sealing strip is time consuming as the required length of the sealing strip is substantial.

Further, the flexible sealing strip between the cooling unit and the electrical machine frame carries also loads and transfers vibrations from the electrical machine to a cooling unit.

The drawback with the previous solutions for reducing gas leakage of the electrical machine is the high number of stages of manufacture, the manufacturing costs and the complicated effect on vibration dynamics.

### BRIEF DESCRIPTION OF THE INVENTION

An object of the present invention is to solve the above mentioned drawbacks and to provide a simple and efficient solution for reducing a gas leakage flow in an electrical machine.

This object is achieved with a sealing arrangement for an electrical machine for reducing a gas leakage flow according to independent claim 1 and with a method for sealing of an electrical machine for reducing a gas leakage flow according to independent claim 13. Some preferred embodiments of the invention are disclosed in the dependent claims.

A sealing arrangement for an electrical machine for reducing a gas leakage flow comprises an electrical machine in gas flow connection with a housing. The sealing arrangement comprises an insulating fabric comprising a first and a second opposing edge regions. The insulating fabric is fitted to cover a gap between the electrical machine and the housing. The insulating fabric is configured to stay non-tensioned, and the insulating fabric is attached to the electrical machine and to the housing by means of cover strips and the first and second edge regions of the insulating fabric comprise a protrusion and the cover strip comprises a space for locking the protrusion at least partially within the cover strip.

A method for sealing of an electrical machine for reducing a gas leakage flow where the electrical machine is in gas flow connection with a housing. The an insulating fabric comprises a first and a second opposing edge regions, the method comprises the steps of: fitting the insulating fabric to cover a gap between the electrical machine and the housing, configuring the insulating fabric to stay non-tensioned, and attaching the insulating fabric to the electrical machine and to the housing by means of cover strips and providing the first and second edge region with a protrusion, and providing the cover strips with spaces for locking the protrusions and locking the protrusions at least partially within the cover strip.

An advantage of the method and arrangement of the invention is that a small number of parts and stages of manufacture is required, the manufacturing cost is low and the non-load bearing sealing does not effect on vibration dynamics.

### BRIEF DESCRIPTION OF THE DRAWINGS

In the following the invention will be described in greater detail by means of preferred embodiments with reference to the attached drawings, in which
Figure **1** shows a side view of a sealing arrangement for an electrical machine;
Figure **2** shows a partial front view of a sealing arrangement for an electrical machine;
Figure **3** shows an insulating fabric;
Figure **4** shows a cover strip;
Figure **5** shows a cover strip at an edge of an electrical machine;
Figure **6** shows a side view of a sealing arrangement for an electrical machine with a covering panel;
Figure **7** shows a sealing arrangement where a housing is positioned above an electrical machine;
Figure **8** shows a sealing arrangement in an electrical generator connected to a diesel engine.

### DETAILED DESCRIPTION OF THE INVENTION

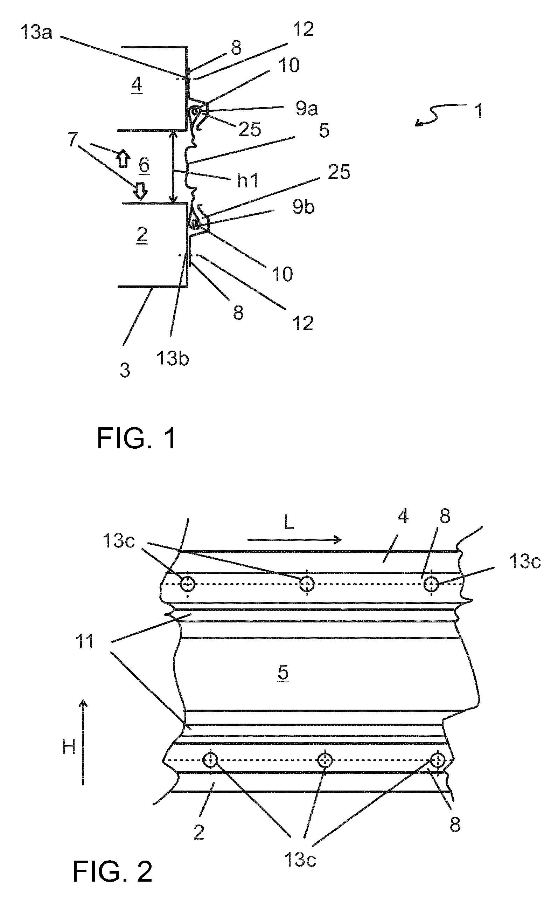

Figure **1** shows a side view of a sealing arrangement **1** for an electrical machine **2.** The electrical machine **2** comprises a rotor and a stator located at the end of an air gap from the rotor. Further, the electrical machine comprises a frame **3** formed around the rotor and the stator, or formed by a stator yoke.

The arrangement **1** comprises an electrical machine **2** in gas flow connection with a housing 4. The gas flow **7** may be a cooling gas flow used to cool the hot parts of the electrical machine **2,** e.g. the stator and the rotor of the electrical machine **2.** The housing **4** preferably comprises at least one of the following: means for supplying the gas flow **7** to the electrical machine **2,** means for discharging the gas flow **7** from the electrical machine **2,** means for cooling the gas flow 7 and means for dehumidifying the gas flow **7.**

An insulating fabric **5** configured to stay non-tensioned is fitted to cover and seal a gap **6** between the electrical machine **2** and the housing 4. As the insulating fabric **5** is configured to stay non-tensioned and the insulating fabric **5** is non-load bearing the insulating fabric **5** does not to carry forces or transfer vibrations from the electrical machine **2** to the housing **4.** The insulating fabric **5** can be configured to stay non-tensioned by providing a surplus length of insulating fabric **5,** for instance.

The insulating fabric **5** keeps the gas **7** flow between the electrical machine **2** and the housing **4** separate from the surrounding air. The insulating fabric **5** also prevents dust, dirt and water from entering to the electrical machine **2** and the housing **4.**

The insulating fabric **5** is attached to the electrical machine **2** and to the housing 4 with cover strips 8. The first **9a** and second opposing edge **9b** region of the insulating fabric **5** comprise a protrusion **10** and the cover strip **8** comprises a space **25** for locking the protrusion **10** at least partially within the cover strip 8. The cover strips **8** preferably also press the insulating fabric **5** against the electrical machine **2** and the housing **4** thereby preventing the movement of the insulating fabric 5 in the length direction L of the cover strips 8.

The cover strip **8** is a hollow profile and provides a form locking, i.e. a form locking connection, which is made by at least partially enveloping of the outer contour of the protrusion **10** with some elements of the cover strip **8.** In the form locking connection the cover strip **8** elements enveloping the protrusion **10** may have different shape than the outer contour of protrusion **10.** The space **25** in the cover strip **8** need not to have the same shape as the protrusion **10** as long as the shape of the space **25** prevents the protrusion **10** from moving away from the space **25.**

The height of the insulating fabric h2 covering the gap **6** is preferably 1,7..2,5 times greater than the maximum height of the gap h1 between the electrical machine **2** and the housing **4.** The surplus length of the insulating fabric **5** allows the insulating fabric **5** to stay loose regardless of the movements of the electrical machine **2** and the housing **4** in relation to each other due to the flexible connection between the electrical machine **2** and the housing **4.**

Figure **2** shows a partial front view of a sealing arrangement **1** for an electrical machine **2.** The insulating fabric **5** is in a form locking connection with the cover strips **8** and the cover strips **8** are mechanically joined to the electrical machine **2** and the housing **4.**

The insulating fabric **5** is attached to the housing **4** and to the electrical machine **2** using cover strips **8.** The space **25** in the cover strips **8** is able to receive the edge protrusions 10 of the insulating fabric **5.** In the Figures the space **25** comprises a recess. The recess is a groove11 shaped portion of the cover strips **8.** The insulating fabric **5** is set between a cover strip **8** and the surface of the housing **4** or the frame **3** of the electrical machine **2** with the protrusions **10** of the insulating fabric **5** in the groove11 shaped portions of the cover strips **8.** Then the cover strip **8** and the frame **3** and the cover strip **8** and the housing **4** are secured together.

The cover strips **8** are fixed to the outer surfaces of the housing **4** and the electrical machine frame **3** with fastening means **12** (shown in Figure 1). The housing **4** and the electrical machine frame **3** comprise preferably fastening points 13a-b for a bolted or screw joint, for instance. The housing **4** and the electrical machine frame **3** may comprise holes in its fastening points 13a-b and the cover strips **8** may be fixed using bolted or screw joints. The cover strips **8** can also be attached to the housing **4** and the electrical machine frame **3** by pop rivets installed to holes made to the housing **4** and the frame **3** and the cover strip **8.**

The space **25** and the protrusion **10** provide a form locking connection which can withstand forces in the height direction H of the gap **6** between the electrical machine **2** and the housing **4.** As the insulating fabric **5** is configured to remain non-tensioned even though the electrical machine **2** and the housing **4** move in relation to each other there is no strong pulling force.

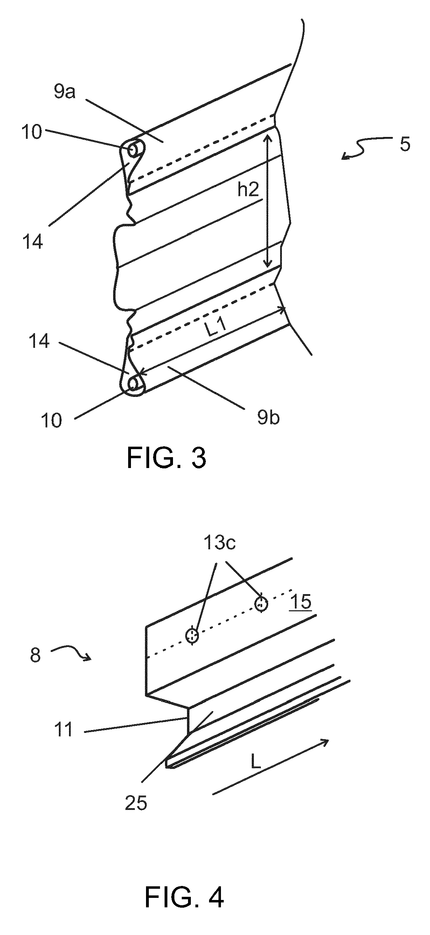

Figure **3** shows one end of an insulating fabric **5.** The first 9a and second edge region 9b comprise a protrusion **10** preferably over the whole length L1 of the insulating fabric **5.** In the Figures the protrusion **10** is formed by creating a channel **14** to the edge region 9a-b of the insulating fabric **5** and installing a round rope, cable or cord to the channel **14.** The channel **14** could also be filled with loose particles to create a protrusion **10.** Further, a hardening gel may also be injected to the channel **14** for forming a protrusion **10.** The protrusion **10** may also be created by attaching a protruding piece to the edge region 9a-b of the insulating fabric **5.**

The channel **14** can be created in several ways. In the Figures the channel 14 is created by folding the insulation fabric **5** lengthwise on both edge regions 9a-b with same sides together. The seam can be made by gluing the insulating fabric **5** or by sewing or melting, for instance.

The insulating fabric **5** should resists heat, forces, stresses such as pushes or pulls, in order to prevent it damaging due to external reasons. The insulating fabric **5** comprises preferably aromatic polyamide fibres.

Furthermore, when using the shapes of the space **25** and the protrusion **10** for creating a locking connection additional connection elements, such as screws and pins, are not required for mounting the insulating fabric **5.** Therefore the first and second edge regions 9a-b of the insulating fabric **5** can remain unperforated providing resistance to forces, stresses such as pushes or pulls.

Figure **4** shows a cover strip **8.** The cover strip **8** is a lengthwise continuous piece and it prevents water from entering under the insulating fabric **5** and to the electrical machine **2** and the housing **4.** The cover strip **8** comprises a groove **11** in its length direction L for receiving the protrusion **10** of the edge region 9a-b of the insulating fabric **5.** The groove **11** partially envelopes the outer contour of the protrusion **10.**

In the Figures shown cover strip **8** comprises a substantially flat part **15** in its length direction L allowing the cover strip **8** to be pressed tightly against the housing **4** and the frame **3** of the electrical machine **2.** The flat part **15** preferably comprises fastening points 13c, e.g. holes, for fastening means **12,** e.g. bolts, screws, pop rivets.

The cover strip **8** may comprise an aluminium profile, a plastic profile, an iron bar or steel bar, for instance.

In the Figures the cover strips **8** fixed to the frame **3** of the electrical machine **2** and the cover strips **8** fixed to the housing **4** are uniform reducing the number of different parts required for the sealing arrangement **1.** However, the cover strips **8** fixed to the frame **3** of the electrical machine **2** and the cover strips **8** fixed to the housing **4** may also have different shapes due to the different fixing surface shapes of the frame **3** of the electrical machine **2** and the housing **4,** for instance.

In the Figures the cover strips **8** fixed to the frame **3** of the electrical machine **2** and the cover strips **8** fixed to the housing 4 are installed with their groove **11** comprising portions facing each other.

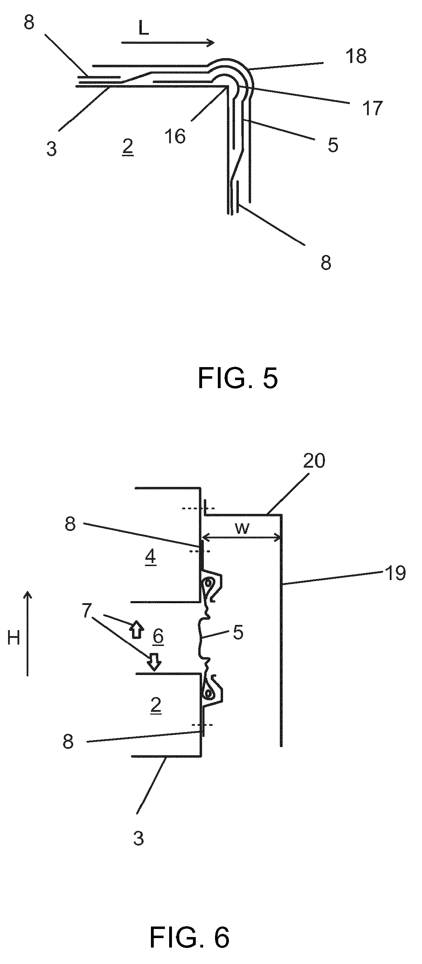

Figure **5** shows a cover strip **8** arrangement at a frame edge **16** of the electrical machine **2.** The parts of the cover strip **8** arrangement in Figure **5** are shown with clearances between the parts for the sake of clarity. The insulating fabric **5** is fitted between an edge base piece **17** and an edge cover piece **18** at the frame edge **16** of the electrical machine **2.** The cover strips **8** on the both sides of the frame edge **16** do not extend to the frame edge **16.** The edge base piece **17** covers the surface of the frame edge **16** and is secured to the frame edge **16** surface. The insulating fabric **5** is positioned on the top of the edge base piece **17.** The edge base piece **17** protects the insulating fabric **5** from chafing on the frame edge **16.** The edge cover piece **18** is positioned on top of the insulating fabric **5** and the edge cover piece **18** is secured to the frame **3** of the electrical machine **2.** The edge cover piece **18** preferably overlaps the ends of the cover strips **8** for providing a tight connection.

The edge base piece **17** comprises a rounded surface shape for surrounding the frame edge **16** and sidewise extending parts for attaching the edge base piece **17** to the frame **3.**

The edge cover piece **18** comprises a groove **11** in its length direction L for receiving the protrusion **10** of the insulating fabric **5.**

The same cover strip **8** arrangement at the frame edge **16** can be used at an edge of the housing **4.**

Figure **6** shows a side view of a sealing arrangement **1** for an electrical machine **2** with a covering panel **19.** The sealing arrangement **1** comprises a covering panel **19** for mechanically protecting the insulating fabric **5** and the covering strips **8.** The covering panel **19** is attached either to a frame **3** of the electrical machine **2** or the housing **4.** The covering panel **19** comprises a projecting part **20** forming a clearance w between the covering panel **19** and the housing **4** and the electrical machine **2** allowing the movement of the flexible connection between the electrical machine **2** and the housing **4.** The covering panel **19** extends over the insulating fabric **5** and the covering strips **8** in the height direction H.

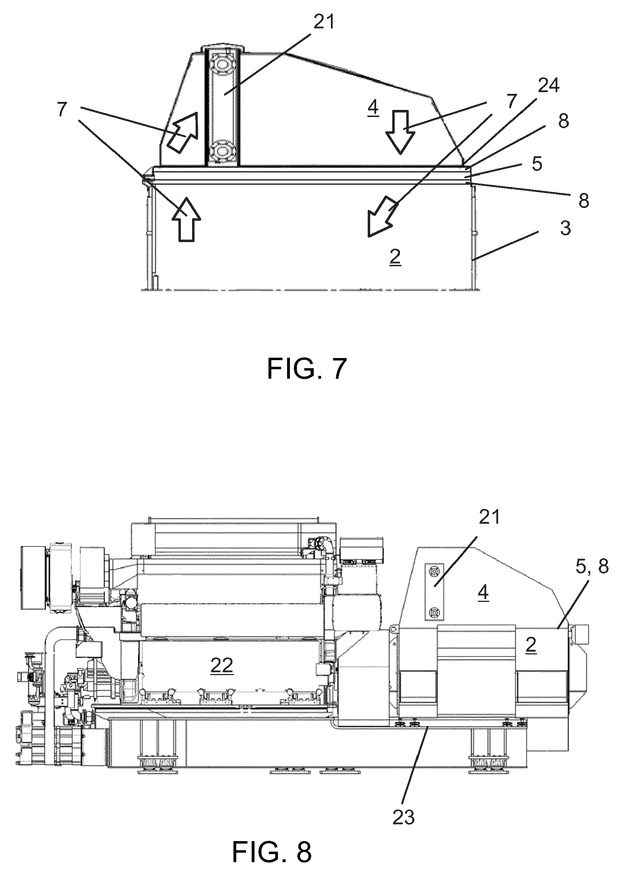

Figure **7** shows a housing **4** positioned above an electrical machine **2** in vertical direction. The housing **4** comprises a cooling unit comprising a heat exchanger **21** within the housing **4.** The cooling is made with a gas flow **7** shown with arrows in Figure **7****.**

The insulating fabric **5** configured to stay non-tensioned is fitted to cover and seal a gap **6** between the electrical machine **2** and the housing **4.** The insulating fabric **5** is attached to the electrical machine **2** and to the housing **4** with cover strips **8** where the insulating fabric **5** is in a form locking connection with the cover strips **8.**

The gas flow **7** is heated in the electrical machine **2** and it flows via the gap **6** to the cooling unit of the housing **4.** The gas flow **7** which is cooled in the heat exchanger **20** flows via the gap **6** from the housing **4** to the electrical machine **2.**

Damping means **24** provide a flexible connection between the electrical machine **2** and the housing **4.** The flexibility of a damping means **24** creates the vibrational isolation between the electrical machine **2** and the housing **4.** The damping means **24** is a spring element, for instance. Slack insulating fabric **5** allows the insulating fabric **5** to stay non-tensioned regardless the position of the damping means **24,** i.e. regardless the gap **6** height h1 between the housing and the electrical machine.

The sealing arrangement **1** for an electrical machine **2** for reducing a gas leakage flow can be used in several types of electrical machines and in many applications comprising electrical machines. The term electrical machine comprises motors converting electricity to mechanical power and generators converting mechanical power into electricity.

One preferred application is an electrical generator connected to a diesel engine **22** where the diesel engine **22** and the electrical generator **2** share a mounting plate **23** as shown in Figure **8****.** In this marine application the sealing arrangement **1** and method is advantageous as it has no effect on the vibration dynamics and transfer of the vibrations to the housing **4** resulting from the electrical machine **2** and the diesel engine **22.**

In a method for sealing of an electrical machine **2** for reducing a gas leakage the electrical machine **2** is in gas flow connection with a housing **4.** An insulating fabric **5** comprises a first **9a** and a second **9b** opposing edge regions. The method comprises the steps of: fitting the insulating fabric **5** to cover a gap **6** between the electrical machine **2** and the housing **4,** configuring the insulating fabric **5** to stay non-tensioned, and attaching the insulating fabric **5** to the electrical machine **2** and to the housing **4** by means of cover strips **8** and providing the first **9a** and second edge region **9b** with a protrusion **10** and providing a form locking connection with the covering strips **8** and strips and the protrusions **10** of the first **9a** and second edge regions **9b.**

The insulating fabric **5** may be provided in rolls and the insulating fabric roll is then cut to pieces. When the insulating fabric **5** is attached to the electrical machine **2** and the housing **4** a fabric joint is made. The joint can be made by melting the insulating fabric ends into each other or by sewing with a handheld sewing machine, for instance.

If the protrusions **10** of the first 9a or second edge region 9b of the insulating fabric **5** are created with a rope it can be used to tighten the insulating fabric **5** against the housing **4** and/or the electrical machine **2.** After the tightening of the insulating fabric **5** the partially loose cover stripes **8** are fixed tightly.

In an embodiment of the sealing arrangement **1** the fixing surfaces for the cover strips **8** in the electrical machine **2** and in the housing 4 are not aligned vertically and/or horizontally. As the insulating fabric **5** is non-load bearing it may easily be inclined. If the shapes of the fixing surfaces of the electrical machine **2** and the housing **4** are rectangular, for instance, but their sizes are not equal then the shape of the insulating fabric **5** may be substantially isosceles trapezoid on each of the four sides.

In a further embodiment the electrical machine and the housing are positioned side by side in horizontal direction.

In a yet another embodiment the housing **4** comprises at least one fan configured to supply gas flow **7** to the electrical machine **2** and a filter for filtering impurities from the gas flow **7.**

The sealing arrangement for an electrical machine for reducing a gas leakage is beneficial from the manufacturing point of view. The arrangement requires only a small number of parts and few stages of manufacture resulting in a low manufacturing cost. Further, an insulating fabric provided in a roll can be utilized for electrical machines and housings of different sizes. As the sealing arrangement comprises a non-load bearing sealing the arrangement is beneficial also from the vibration dynamics point of view. With the sealing arrangement it is also possible to prevent the gas leakage from the gap between the electrical machine and the housing if the arrangement comprises an airtight installation of the insulating fabric. The airtight installation of the insulating fabric means airtight joints with the electrical machine and the housing and for the fabric joint.

It will be obvious to a person skilled in the art that, as the technology advances, the inventive concept can be implemented in various ways. The invention and its embodiments are not limited to the examples described above but may vary within the scope of the claims.

Part list: **1** a sealing arrangement, **2** an electrical machine, **3** a frame, **4** a housing, **5** an insulating fabric, **6** gap, **7** a gas flow, **8** a cover strip, **9a** a first edge region, **9b** a second edge region, **10** a protrusion, **11 a** groove, **12** fastening means, **13a-c a** fastening point, **14** a channel, **15** a flat part, **16** a frame edge, **17** an edge base piece, **18** an edge cover piece, **19** a covering panel, **20** a projecting part, **21** a heat exchanger, **22** a diesel engine, **23** a mounting plate, **24** damping means, **25** space.

L length direction, **L1** a length of the insulating fabric, **H** height direction, **h1** a height of a gap, **h2** a height of an insulating fabric, **w** a clearance.

## Claims

1. A sealing arrangement for an electrical machine for reducing a gas leakage flow, the sealing arrangement (1) comprising an electrical machine (2) in gas flow (7) connection with a housing (4), **characterized in that** the sealing arrangement (1) comprises an insulating fabric (5) comprising a first (9a) and a second (9b) opposing edge regions, the insulating fabric (5) is fitted to cover a gap (6) between the electrical machine (2) and the housing (4), the insulating fabric (5) is configured to stay non-tensioned, and the insulating fabric (5) is attached to the electrical machine (2) and to the housing (4) by means of cover strips (8) and the first (9a) and second (9b) edge regions of the insulating fabric (5)comprise a protrusion (10) and the cover strip (8) comprises a space (25) for locking the protrusion (10) at least partially within the cover strip (8).

2. The sealing arrangement according to claim 1, **characterized in that** the first (9a) and second (9b) edge regions comprise a protrusion (10) over the whole length (L1) of the insulating fabric (5).

3. The sealing arrangement as claimed in any one of claims 1 to 2, **characterized in that** the arrangement comprises damping means (24) providing a flexible connection between the electrical machine (2) and the housing (4).

4. The sealing arrangement as claimed in any one of claims 1 to 3, **characterized in that** the insulating fabric (5) is fitted between an edge base piece (17) and an edge cover piece (18) on the edge (16) of the electrical machine (2) and the housing (4).

5. The sealing arrangement as claimed in any one of claims 1 to 4, **characterized in that** the insulating fabric (5) is a non-load bearing.

6. The sealing arrangement as claimed in any one of claims 1 to 5, **characterized in that** that the first (9a) and second edge (9b) regions of the insulating fabric (5) are unperforated.

7. The sealing arrangement as claimed in any one of claims 1 to 6, **characterized in that** the height (h2) of the insulating fabric (5) is 1,7..2,5 times greater than the maximum height (h1) of the gap (6) between the electrical machine (2) and the housing (4).

8. The sealing arrangement as claimed in any one of claims 1 to 7, **characterized in that** the arrangement comprises a covering panel (19) attached to the electrical machine (2) or the housing (4), and the covering panel (19) comprises a projecting part (20) forming a clearance (w) between the covering panel (19) and the electrical machine (2) and the housing (4), and the covering panel (19) extends over the insulating fabric (5)and the covering strips (8) in the height direction (H) of the gap (6).

9. The sealing arrangement as claimed in any one of claims 1 to 8, **characterized in that** the housing (4) is positioned above the electrical machine (2) in vertical direction or the housing (4) and the electrical machine (2) are positioned side by side in horizontal direction.

10. The sealing arrangement as claimed in any one of claims 1 to 9, **characterized in that** the housing (4) comprises at least at least one of the following: means for supplying the gas flow (7) to the electrical machine (2), means for discharging the gas flow (7) from the electrical machine (2), means for cooling the gas flow (7) and means for dehumidifying the gas flow (7).

11. The sealing arrangement as claimed in any one of claims 1 to 10, **characterized in that** the housing (4) comprises a cooling unit comprising at least one heat exchanger (21).

12. The sealing arrangement as claimed in any one of claims 1 to 11, **characterized in that** the insulating fabric (5) comprises aromatic polyamide fibres.

13. A method for sealing of an electrical machine for reducing a gas leakage flow, the electrical machine (2) being in gas flow (7) connection with a housing (4), **characterized in that** in the method an insulating fabric (5) comprises a first (9a) and a second (9b) opposing edge regions, the method comprises the steps of: fitting the insulating fabric (5) to cover a gap (6) between the electrical machine (2) and the housing (4), configuring the insulating fabric (5) to stay non-tensioned, and attaching the insulating fabric (5) to the electrical machine (2) and to the housing (4) by means of cover strips (8) and providing the first (9a) and second (9b) edge regions with a protrusion (10) and providing the cover strips (8) with spaces (25) for locking the protrusions (10) and locking the protrusions (10) at least partially within the cover strip (8).

14. An electrical machine comprising a sealing arrangement (1) as claimed in any one of the preceding claims.

15. The electrical machine according to claim 14, **characterized in that** the electrical machine (2) is an electrical generator connected to a diesel engine (22).
